# EUROPEAN PATENT SPECIFICATION

(11) **EP 4 525 176 B1**
(45) Date of publication and mention of the grant of the patent: **30.09.2026**
(21) Application number: 23921506.4
(22) Date of filing: 21.12.2023
(51) Int. Cl.: H01M 50/383, H01M 10/42, H01M 50/204, H01M 50/249, H01M 50/105, H01M 50/211, H01M 50/367

(54) **BATTERY MODULE, BATTERY PACK INCLUDING SAME, AND VEHICLE INCLUDING SAME**
BATTERIEMODUL, BATTERIEPACK DAMIT UND FAHRZEUG DAMIT
MODULE DE BATTERIE, BLOC-BATTERIE LE COMPRENANT, ET VÉHICULE LE COMPRENANT

(30) Priority: 06.02.2023 KR 20230015619
(43) Date of publication of application: 19.03.2025
(73) Proprietor: LG Energy Solution, Ltd., Seoul 07335 (KR)
(72) Inventor: LEE, Jung-Hoon, Daejeon 34122 (KR); JANG, Sung-Hwan, Daejeon 34122 (KR)
(74) Representative: Plasseraud IP
(86) International application number: PCT/KR2023/021254
(87) International publication number: WO 2024/167134

(56) References cited:
- CN-A- 114 424 392
- KR-A- 20090 064 041
- KR-A- 20140 055 641
- KR-A- 20160 058 514
- KR-A- 20170 049 014
- KR-A- 20170 068 332
- KR-A- 20190 004 641
- KR-A- 20190 094 921

## Description

### TECHNICAL FIELD

The present application claims priority to Korean Patent Application No. 10-2023-0015619 filed on February 06, 2023 in the Republic of Korea.

The present disclosure relates to a battery module, and a battery pack and a vehicle including the same, and more specifically, it relates to a battery module capable of securing the stability of the battery module by preventing propagation of flame or gas, and a battery pack and a vehicle including the same.

### BACKGROUND ART

As technology development and demand for mobile devices increase, demand for secondary batteries as an energy source are rapidly increasing. Although nickel-cadmium batteries or nickel-hydrogen batteries have conventionally been used as secondary batteries, nowadays, lithium secondary batteries are widely used because they have advantages of flexible charging and discharging due to almost no memory effect, a very low self-discharge rate, and a high energy density, compared to nickel-based secondary batteries.

The lithium secondary batteries generally use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

Lithium secondary batteries are configured to have a positive electrode, a negative electrode, a separator interposed therebetween, and an electrolyte, and may be classified to lithium-ion batteries (LIBs) and polymer lithium-ion batteries (PLIBs) depending on the materials used for the positive electrode active material and negative electrode active material. Typically, the electrodes of the lithium secondary batteries are formed by applying a positive electrode or negative electrode active material to a collector such as an aluminum or copper sheet, mesh, film, or foil and then drying it. In addition, various types of secondary batteries may have a housing capable of protecting the battery cell, and may be used as a module including a plurality of battery cells.

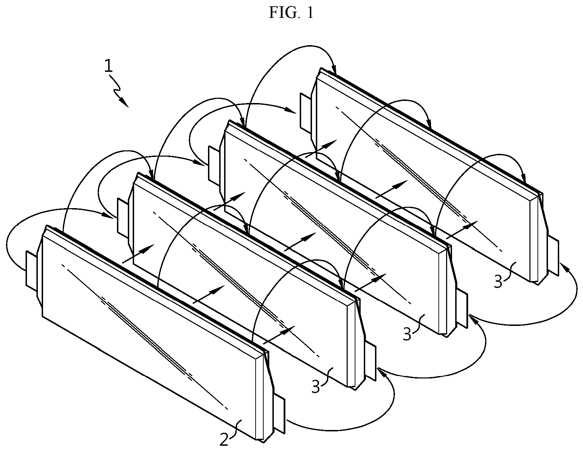

FIG. 1 is a diagram schematically illustrating the arrangement of a plurality of battery cells in a conventional battery module including the plurality of battery cells. In FIG. 1, a battery module case is omitted.

Referring to FIG. 1, if flame and gas are generated by ignition in one battery cell 2 among a plurality of battery cells 1, the flame and gas move and transfer from the ignited battery cell 2 to another battery cell 3 that does not ignite.

In this case, as shown in FIG. 1, the flame and gas may propagate in various directions, for example, toward the top or sides of the battery cell (see arrows in FIG. 1).

Accordingly, there is a problem in which the battery module or battery pack is damaged, burned out, or explodes due to a chain reaction of flame and gas inside the battery module, making it impossible to ensure the stability of the battery module.

CN 114424392 discloses a battery module having battery cells, the battery cell having a flame gas guide portion.

### DISCLOSURE

### Technical Problem

The present disclosure has been designed to solve the problems of the related art, and therefore the present disclosure is directed to providing a battery module capable of discharging flame or gas generated from any battery cell in a predetermined direction to prevent propagation thereof to neighboring battery cells, thereby securing the stability of the battery module, and a battery pack and a vehicle including the same.

### Technical Solution

The invention is defined in the claims. According to the present invention, there is provided a battery module including: a battery cell stack in which a plurality of battery cells is stacked; and a case configured to store the battery cell stack therein, wherein the battery cell includes a flame gas guide portion configured to guide flame or gas generated from the battery cell in one direction.

The battery cell is a pouch-type battery cell, and the pouch-type battery cell includes: an internal pouch configured to store a positive electrode plate, a separator, a negative electrode plate, and an electrolyte therein and have a plurality of edges formed thereon; a positive electrode lead connected to the positive electrode plate; a negative electrode lead connected to the negative electrode plate; a flame-retardant member configured to surround only a portion of the internal pouch; and an external pouch configured to surround the internal pouch and the flame-retardant member, and the flame gas guide portion may be formed in a portion of the internal pouch that is not surrounded by the flame-retardant member.

In an embodiment, the positive electrode lead may protrude from the inside of the internal pouch to the outside through one of the plurality of edges of the internal pouch, and the negative electrode lead may protrude from the inside of the internal pouch to the outside through the same edge as the edge where the positive electrode lead is located, among the plurality of edges of the internal pouch.

In an embodiment, the flame-retardant member may be configured to surround the remaining edges of the plurality of edges of the internal pouch, excluding the edge where the positive electrode lead and the negative electrode lead are located.

In an embodiment, the internal pouch may be formed in a square shape, and the positive electrode lead and the negative electrode lead may protrude from the inside of the internal pouch to the outside through a first edge of four edges of the internal pouch, and the flame gas guide portion may be formed on the first edge.

In an embodiment, the internal pouch may be formed in a rectangle including a long-side edge and a short-side edge, and the first edge may be the long-side edge.

In an embodiment, the flame-retardant member may be made of mica or glass fiber.

In an embodiment, the battery cell may be a pouch-type battery cell, and the pouch-type battery cell may include: an internal pouch configured to store a positive electrode plate, a separator, a negative electrode plate, and an electrolyte therein and have a plurality of edges formed thereon; a positive electrode lead connected to the positive electrode plate; a negative electrode lead connected to the negative electrode plate; a flame-retardant member configured to surround only a portion of the internal pouch; and an external cover configured to surround the internal pouch and the flame-retardant member, and the flame gas guide portion may be formed in a portion of the internal pouch that is not surrounded by the flame-retardant member.

In an embodiment, the flame-retardant member may be made of iron or stainless steel (SUS (Steel Use Stainless)).

In an embodiment, an outlet may be formed in a portion of the case where the flame gas guide portion is located such that the flame or gas guided through the flame gas guide portion is discharged to the outside of the case.

In an embodiment, the case may include an upper case, a lower case, and a side case, and the outlet may be formed on at least one of the upper case and the side case.

Meanwhile, according to another aspect of the present disclosure, there may be provided a battery pack including the battery module described above, and a vehicle including the battery module.

### Advantageous Effects

Embodiments of the present disclosure have the effect of discharging flame or gas generated from any battery cell in a predetermined direction to prevent propagation thereof to neighboring battery cells, thereby securing the stability of the battery module.

### DESCRIPTION OF DRAWINGS

FIG. 1 is a diagram schematically illustrating the arrangement of a plurality of battery cells in a conventional battery module including the plurality of battery cells.
FIG. 2 is a diagram illustrating an internal pouch in a battery cell according to an embodiment of the present invention.
FIG. 3 is a diagram illustrating the internal pouch in FIG. 2 surrounded by a flame-retardant member and an external pouch.
FIG. 4 is a diagram illustrating a battery cell according to another embodiment of the invention in relation to FIG. 2.
FIG. 5 is a perspective view of the battery cell in FIG. 4 separated from a battery module case.
FIG. 6 is a combined perspective view of FIG. 5, which illustrates the interior.
FIG. 7 is a cross-sectional view seen from the front in FIG. 6.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

The term "couple" or "connect" used in this specification refers to the case where one member is indirectly coupled or connected to another member through a connection member, as well as the case where one member is directly coupled or connected to another member.

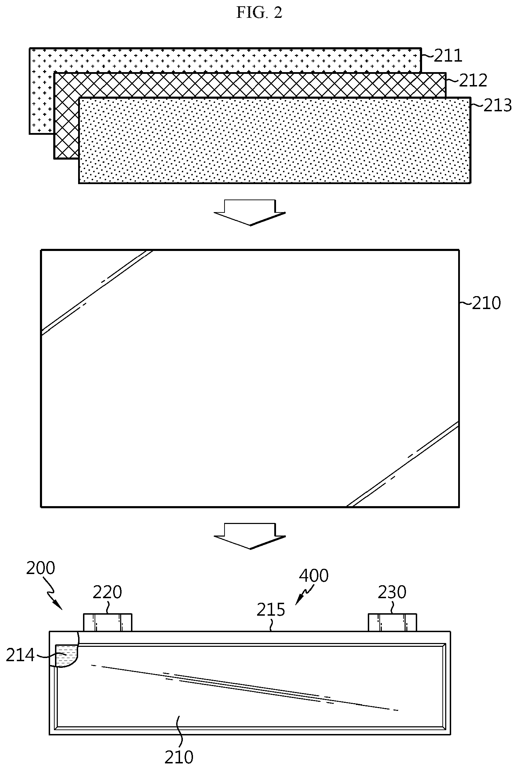

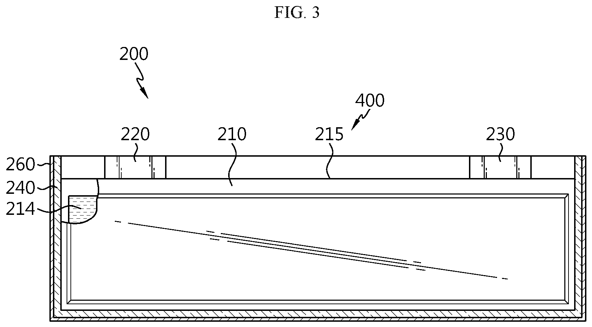

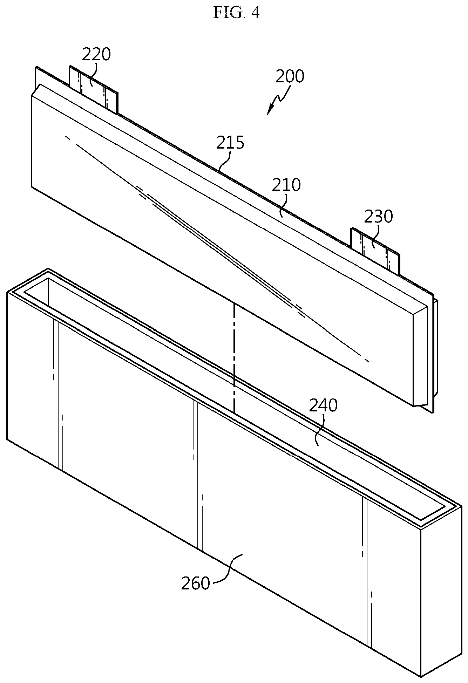

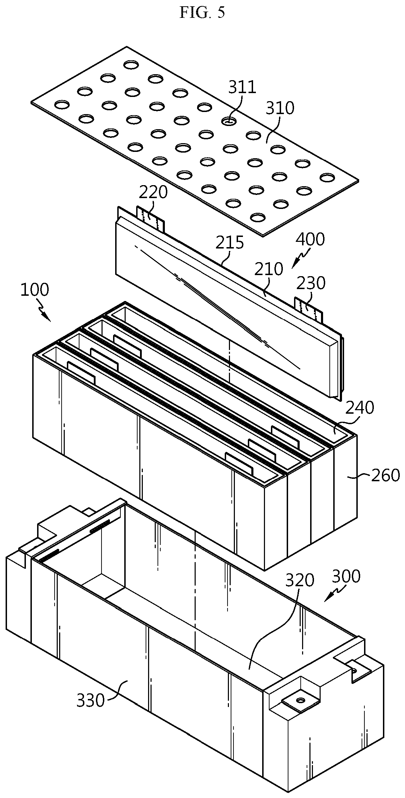

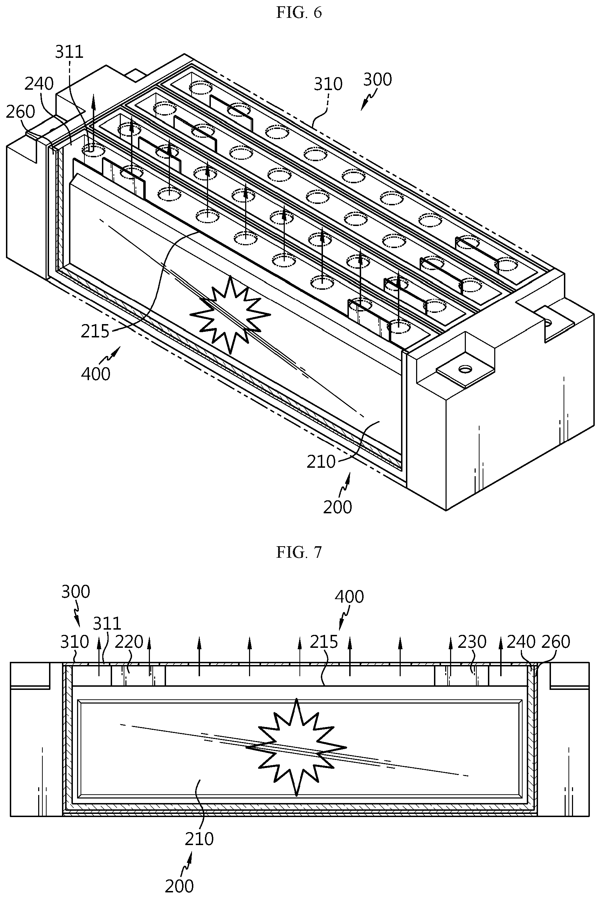

FIG. 2 is a diagram illustrating an internal pouch in a battery cell according to an embodiment of the present invention, FIG. 3 is a diagram illustrating the internal pouch in FIG. 2 surrounded by a flame-retardant member and an external pouch, FIG. 4 is a diagram illustrating a battery cell according to another embodiment in relation to FIG. 2, FIG. 5 is a perspective view of the battery cell in FIG. 4 separated from a case of the battery module, FIG. 6 is a combined perspective view of FIG. 5, which illustrates the interior, and FIG. 7 is a cross-sectional view seen from the front in FIG. 6.

Referring to the drawings, a battery module 10 according to an embodiment of the present disclosure includes a battery cell stack 100 and a case 300.

The battery cell stack 100 may be configured such that a plurality of battery cells 200 is stacked (see FIG. 5). In addition, the battery cell 200 includes a flame gas guide portion 400 for guiding the flame or gas generated from the battery cell 200 in one direction. The flame gas guide portion 400 will be described in detail later.

The battery cell 200 may have various structures, and the plurality of battery cells 200 may be stacked in various ways. The battery cell 200 may be configured in a structure in which a plurality of unit cells, in which a positive electrode plate, a separator, and a negative electrode plate are arranged in sequence, or a plurality of bi-cells, in which a positive electrode plate, a separator, a negative electrode plate, a separator, a positive electrode plate, a separator, and a negative electrode plate are arranged in sequence, is stacked according to the battery capacity.

The battery cell 200 may have an electrode lead. The electrode lead is a kind of terminal that is exposed to the outside and connected to an external device, and may be made of a conductive material. The electrode lead may include a positive electrode lead 220 and a negative electrode lead 230.

The battery cell 200 may include various types and, for example, may be configured as a pouch-type battery cell 200.

Referring to FIGS. 2 and 3 showing an embodiment, the pouch-type battery cell 200 may be configured to include an internal pouch 210, a positive electrode lead 220, a negative electrode lead 230, a flame-retardant member 240, and an external pouch 250.

The internal pouch 210 stores a positive electrode plate 211, a separator 212, a negative electrode plate 213, and an electrolyte 214. In addition, the internal pouch 210 may be formed in various shapes, and a plurality of edges is formed on the internal pouch 210.

The positive electrode lead 220 is connected to the positive electrode plate 211, and the negative electrode lead 230 is connected to the negative electrode plate 213. In addition, referring to FIG. 2, the positive electrode lead 220 and the negative electrode lead 230 protrude from the inside of the internal pouch 210 to the outside.

Referring to FIGS. 2 and 3, the positive electrode lead 220 and the negative electrode lead 230 may be positioned to face in the same direction.

For example, the positive electrode lead 220 may protrude from the inside of the internal pouch 210 to the outside through one of the plurality of edges of the internal pouch 210.

In addition, the negative electrode lead 230 may protrude from the inside of the internal pouch 210 to the outside through the same edge as the edge where the positive electrode lead 220 is located, among the plurality of edges of the internal pouch 210.

That is, the positive electrode lead 220 and the negative electrode lead 230 may protrude from the inside of the internal pouch 210 to the outside through the same edge among the plurality of edges of the internal pouch 210.

Referring to FIG. 3, the flame-retardant member 240 may be configured to surround only a portion of the internal pouch 210. For example, the flame-retardant member 240 may be configured to surround the edges of the internal pouch 210, excluding the edge where both the positive electrode lead 220 and the negative electrode lead 230 are located.

Referring to the example in FIG. 3, the flame-retardant member 240 is configured to surround both sides and the bottom of the internal pouch 210, excluding the top of the internal pouch 210. That is, there is no flame-retardant member 240 only at the top of the internal pouch 210.

The flame-retardant member 240 may be made of various materials, such that mica or glass fiber, but is not limited thereto.

Here, a flame gas guide portion 400 is formed in a portion of the internal pouch 210 that is not surrounded by the flame-retardant member 240.

The flame gas guide portion 400 guides flame or gas to be discharged to the outside of the internal pouch 210, and for example, the flame gas guide portion 400 is formed at the top of the internal pouch 210 in FIG. 3.

That is, if flame or gas is generated inside the internal pouch 210, the flame or gas is unable to be discharged to the outside through the portions surrounded by the flame-retardant member 240, but is able to be discharged through the top of the internal pouch 210 to which the flame-retardant member 240 is not provided.

That is, the flame or gas is guided to the flame gas guide portion 400 at the top of the internal pouch 210 not provided with the flame-retardant member 240.

The internal pouch 210 may have various shapes, and for example, may be formed in a square as shown in FIG. 3 .

In addition, the positive electrode lead 220 and the negative electrode lead 230 protrude from the inside of the internal pouch 210 to the outside through a first edge 215 (the upper edge of the internal pouch 210 in FIGS. 2 and 3) among the four edges of the internal pouch 210.

Here, in the case where the flame-retardant member 240 is configured to surround both sides and the bottom of the internal pouch 210, excluding the top of the internal pouch 210, as described above, the flame gas guide portion 400 is formed at the top of the internal pouch 210 not provided with the flame-retardant member 240, that is, at the first edge 215.

In addition, for example, in the case where the internal pouch 210 is configured in a rectangle including a long-side edge and a short-side edge, the first edge 215 may be a long-side edge.

Referring to FIG. 3, the external pouch 250 is configured to surround the internal pouch 210 and the flame-retardant member 240. The external pouch 250 may be formed of the same material and in the same shape as the internal pouch 210.

The external pouch 250 may completely seal the internal pouch 210, or may be formed such that only the top of the internal pouch 210, having the flame gas guide portion 400 formed, is open.

Meanwhile, other embodiments in relation to FIGS. 2 and 3 are shown in FIGS. 4 to 7.

The embodiment in FIGS. 4 to 7 are different from that in FIGS. 2 and 3 in that an external cover 260 is provided instead of the external pouch 250 in FIGS. 2 and 3. Hereinafter, differences from the embodiment in FIGS. 2 and 3 will be described, and the above description will be applied to the common elements therebetween.

Referring to FIGS. 4 to 7, the configuration of the internal pouch 210 and the arrangement of the positive electrode lead 220 and the negative electrode lead 230 in the same direction are the same as those in the embodiment in FIGS. 2 and 3 described above.

In addition, although there may be some differences in the shape of the flame-retardant member 240, the basic arrangement position and function are the same. Meanwhile, in this embodiment, although the flame-retardant member 240 may be made of mica or glass fiber, it may also be made of iron or stainless steel (SUS (Steel Use Stainless)).

The external cover 260 is provided to surround the internal pouch 210 and the flame-retardant member 240. The external pouch 250 may be formed of the same material as the internal pouch 210, whereas the external cover 260 may be formed of a different material from the internal pouch 210.

Meanwhile, the battery cell stack 100 may have a plurality of cartridges (not shown) that accommodate the battery cells 200. Each cartridge (not shown) may be manufactured by plastic injection molding, and a plurality of cartridges (not shown) having a storage portion capable of storing the battery cells 200 may be stacked.

A cartridge assembly in which a plurality of cartridges (not shown) is stacked may have connector elements or terminal elements.

The connector elements may include, for example, various types of electrical connection components or members for connection with a BMS (Battery Management System) (not shown) capable of providing data on the voltage or temperature of the battery cell 200 or the like.

In addition, the terminal elements are main terminals connected to the battery cell 200 and include a positive electrode terminal and a negative electrode terminal, and the terminal element may have a terminal bolt to be electrically connected to the outside structure. Meanwhile, the battery cell 200 may have various shapes.

The battery cell stack 100 is stored in the case 300. The case 300 surrounds the battery cells 200 to protect the battery cells 200 from external vibration or impact.

The case 300 may be formed in a shape corresponding to the shape of the battery cell stack 100. For example, if the battery cell 200 and the battery cell stack 100 are configured in a hexahedral shape with a square cross-section, the case 300 may also be configured in a hexahedral shape corresponding thereto.

The case 300 may be manufactured, for example, by bending a metal plate, and as a result, the case 300 may be manufactured as an integrated piece. If the case 300 is manufactured as an integrated piece, the coupling process may be simplified and easy. Alternatively, the case 300 may be configured as a separate type and coupled by welding or the like. However, the material of the case 300 is not limited to metal.

Referring to FIGS. 5 to 7, a portion of the case 300 where the flame gas guide portion 400 is located may have an outlet 311 formed through which the flame or gas guided by the flame gas guide portion 400 exit to the outside.

For example, the case 300 may include an upper case 310, a lower case 320, and a side case 330, and the outlet 311 may be formed on the upper case 310, may be formed on the side case 330, or may be formed on both the upper case 310 and the side case 330.

That is, although the outlet 311 is formed on the upper case 310 in FIGS. 5 to 7, the present invention is not limited thereto, and the location of the outlet 311 may vary.

Meanwhile, although FIGS. 4 to 7 illustrate an embodiment in which the external cover 260 is stored in the case 300, the configuration of the discharge of flame or gas through the outlet 311 may be also applicable to the embodiment in FIGS. 2 and 3 in which the external pouch 250 is stored in the case 300.

Hereinafter, the configuration and operational effects of the battery module 10 according to an embodiment of the present disclosure will be described.

Referring to FIGS. 2 and 3, the positive electrode lead 220 and the negative electrode lead 230 protrude from the inside of the internal pouch 210 to the outside through the same edge among a plurality of edges of the internal pouch 210.

In addition, the flame-retardant member 240 is configured to surround both sides and the bottom of the internal pouch 210, excluding the top of the internal pouch 210, that is, to surround the remaining edges, excluding the edge where both the positive electrode lead 220 and the negative electrode lead 230 are located, among the plurality of edges of the internal pouch 210.

In addition, a flame gas guide portion 400 is formed in a portion of the internal pouch 210 that is not surrounded by the flame-retardant member 240, for example, at the top of the internal pouch 210 in FIG. 3.

In addition, the external pouch 250 is configured to surround the internal pouch 210 and the flame-retardant member 240. Here, the external pouch 250 is made of the same material and has the same shape as the internal pouch 210.

If flame or gas is generated inside the internal pouch 210, the flame or gas is unable to be discharged through the portions surrounded by the flame-retardant member 240, but is able to be discharged to the outside of the internal pouch 210 through the top of the internal pouch 210 not provided with the flame-retardant member 240, that is, through the flame gas guide portion 400.

That is, the flame or gas is guided to the top of the internal pouch 210 not provided with the flame-retardant member 240.

In addition, referring to FIGS. 4 to 7, in another embodiment in relation to FIGS. 2 and 3, an external cover 260 is provided instead of the external pouch 250.

In addition, an outlet 311 is formed on the case 300, for example, the upper case 310 in common in both the embodiment in FIGS. 2 and 3 and the embodiment in FIGS. 4 to 7, and the flame or gas generated in the battery cell 200 moves through the top of the internal pouch 210 not provided with the flame-retardant member 240 and then exit to the outside of the case 300 through the outlet 311 of the upper case 310 (see arrows in FIGS. 6 and 7).

That is, even if flame or gas is generated from any one of the plurality of battery cells 200 inside the battery module 10, the flame or gas may be discharged to the outside of the case 300 through the flame gas guide portion 400 of the battery cell 200 and the outlet 311 of the upper case 310 while not moving to the sides of the battery cell 200, thereby preventing flame or gas from spreading to other adjacent battery cells 200.

Meanwhile, a battery pack (not shown) according to an embodiment of the present disclosure may include one or more battery modules 10 according to an embodiment of the present disclosure described above.

In addition, the battery pack (not shown) may further include, in addition to the battery module 10, a pack case (not shown) for storing the battery module 10, and various devices for controlling charging and discharging of the battery module 10, such as a BMS, a current sensor, a fuse, or the like.

Meanwhile, a vehicle (not shown) according to an embodiment of the present disclosure may include the aforementioned battery module 10 or battery pack (not shown), and the battery pack (not shown) may include the battery module 10. In addition, the battery module 10 according to an embodiment of the present disclosure may be applied to the vehicle (not shown), for example, a predetermined vehicle (not shown) that is configured to use electricity, such as an electric vehicle or a hybrid vehicle.

### Industrial Applicability

The present disclosure relates to a battery module, and a battery pack and a vehicle including them, and particularly, is available to industries related to secondary batteries.

## Claims

1. A battery module comprising:
a battery cell stack (100) in which a plurality of battery cells (200) is stacked; and
a case (300) storing the battery cell stack (100) therein,
the battery module being capable of discharging flame or gas generated from any battery cell in a predetermined direction to prevent propagation thereof to neighboring battery cells,
each battery cell (200) of the battery cell stack (100) comprising a flame gas guide portion (400) configured to guide flame or gas generated from the battery cell (200) in one direction,
said battery cell (200) being a pouch-type battery cell (200),
**characterized in that** said pouch-type battery cell (200) comprises:
an internal pouch (210) storing a positive electrode plate (211), a separator (212), a negative electrode plate (213), and an electrolyte (214) therein and have a plurality of edges formed thereon;
a positive electrode lead (220) connected to the positive electrode plate (211);
a negative electrode lead (230) connected to the negative electrode plate (213);
a flame-retardant member (240) surrounding only a portion of the internal pouch (210); and
an external pouch (250)surrounding the internal pouch (210) and the flame-retardant member (240), and
the flame gas guide portion (400) being formed in a portion of the internal pouch (210) that is not surrounded by the flame-retardant member (240).

2. The battery module according to claim 1,
wherein the positive electrode lead (220) protrudes from the inside of the internal pouch (210) to the outside through one of the plurality of edges of the internal pouch (210), and
wherein the negative electrode lead (230) protrudes from the inside of the internal pouch (210) to the outside through the same edge as the edge where the positive electrode lead (220) is located, among the plurality of edges of the internal pouch (210).

3. The battery module according to claim 2,
wherein the flame-retardant member (240) surrounds the remaining edges of the plurality of edges of the internal pouch (210), excluding the edge where the positive electrode lead (220) and the negative electrode lead (230) are located.

4. The battery module according to claim 3,
wherein the internal pouch (210) is formed in a square shape,
wherein the positive electrode lead (220) and the negative electrode lead (230) protrude from the inside of the internal pouch (210) to the outside through a first edge (215) of four edges of the internal pouch (210), and
wherein the flame gas guide portion (400) is formed on the first edge (215).

5. The battery module according to claim 4,
wherein the internal pouch (210) is formed in a rectangle comprising a long-side edge and a short-side edge, and
wherein the first edge (215) is the long-side edge.

6. The battery module according to claim 1,
wherein the flame-retardant member (240) is made of mica or glass fiber.

7. The battery module according to claim 1,
wherein an outlet (311) is formed in a portion of the case (300) where the flame gas guide portion (400) is located such that the flame or gas guided through the flame gas guide portion (400) is discharged to the outside of the case (300).

8. The battery module according to claim 7,
wherein the case (300) comprises an upper part of the case (310), a lower part of the case (320), and a side part of the case (330), and
wherein the outlet (311) is formed on at least one of the upper case (310) and the side case (330).

9. A battery pack comprising the battery module (10) according to any one of claims 1 to 8.

10. A vehicle comprising the battery module (10) according to any one of claims 1 to 8.

## Patentansprüche

1. Batteriemodul, umfassend:
einen Batteriezellenstapel (100), in dem eine Vielzahl von Batteriezellen (200) gestapelt ist; und
ein Gehäuse (300), das den Batteriezellenstapel (100) darin aufnimmt,
wobei das Batteriemodul in der Lage ist, Flamme oder Gas, die von einer beliebigen Batteriezelle erzeugt werden, in eine vorbestimmte Richtung abzuleiten, um deren Ausbreitung auf benachbarte Batteriezellen zu verhindern,
wobei jede Batteriezelle (200) des Batteriezellenstapels (100) einen Flammengasführungsteil (400) umfasst, der so konfiguriert ist, dass er von der Batteriezelle (200) erzeugte Flamme oder Gas in eine Richtung führt,
wobei die Batteriezelle (200) eine Batteriezelle vom Pouch-Typ (200) ist,
**dadurch gekennzeichnet, dass** die Batteriezelle vom Pouch-Typ (200) Folgendes umfasst:
einen internen Pouch (210), der eine positive Elektrodenplatte (211), einen Separator (212), eine negative Elektrodenplatte (213) und einen Elektrolyten (214) darin aufnimmt und eine Vielzahl von daran ausgebildeten Kanten aufweist;
eine positive Elektrodenleitung (220), die mit der positiven Elektrodenplatte (211) verbunden ist;
eine negative Elektrodenleitung (230), die mit der negativen Elektrodenplatte (213) verbunden ist;
ein flammhemmendes Element (240), das nur einen Teil des internen Pouches (210) umgibt; und
einen externen Pouch (250), der den internen Pouch (210) und das flammhemmende Element (240) umgibt, und
wobei der Flammengasführungsteil (400) in einem Teil des internen Pouches (210) ausgebildet ist, der nicht von dem flammhemmenden Element (240) umgeben ist.

2. Batteriemodul nach Anspruch 1,
wobei die positive Elektrodenleitung (220) von der Innenseite des internen Pouches (210) durch eine der Vielzahl von Kanten des internen Pouches (210) nach außen vorsteht, und
wobei die negative Elektrodenleitung (230) von der Innenseite des internen Pouches (210) durch dieselbe Kante wie die Kante, an der sich die positive Elektrodenleitung (220) befindet, aus der Vielzahl von Kanten des internen Pouches (210) nach außen vorsteht.

3. Batteriemodul nach Anspruch 2,
wobei das flammhemmende Element (240) die verbleibenden Kanten der Vielzahl von Kanten des internen Pouches (210) umgibt, mit Ausnahme der Kante, an der sich die positive Elektrodenleitung (220) und die negative Elektrodenleitung (230) befinden.

4. Batteriemodul nach Anspruch 3,
wobei der interne Pouch (210) in einer quadratischen Form ausgebildet ist,
wobei die positive Elektrodenleitung (220) und die negative Elektrodenleitung (230) von der Innenseite des internen Pouches (210) durch eine erste Kante (215) von vier Kanten des internen Pouches (210) nach außen vorstehen, und
wobei der Flammengasführungsteil (400) an der ersten Kante (215) ausgebildet ist.

5. Batteriemodul nach Anspruch 4,
wobei der interne Pouch (210) in einem Rechteck ausgebildet ist, das eine Längsseitenkante und eine Kurzseitenkante umfasst, und
wobei die erste Kante (215) die Längsseitenkante ist.

6. Batteriemodul nach Anspruch 1,
wobei das flammhemmende Element (240) aus Glimmer oder Glasfaser hergestellt ist.

7. Batteriemodul nach Anspruch 1,
wobei ein Auslass (311) in einem Teil des Gehäuses (300) ausgebildet ist, in dem sich der Flammengasführungsteil (400) befindet, so dass die durch den Flammengasführungsteil (400) geführte Flamme oder das Gas zur Außenseite des Gehäuses (300) abgeleitet wird.

8. Batteriemodul nach Anspruch 7,
wobei das Gehäuse (300) einen oberen Teil des Gehäuses (310), einen unteren Teil des Gehäuses (320) und einen Seitenteil des Gehäuses (330) umfasst, und
wobei der Auslass (311) an mindestens einem von dem oberen Gehäuse (310) und dem seitlichen Gehäuse (330) ausgebildet ist.

9. Batteriepack, umfassend das Batteriemodul (10) nach einem der Ansprüche 1 bis 8.

10. Fahrzeug, umfassend das Batteriemodul (10) nach einem der Ansprüche 1 bis 8.

## Revendications

1. Module de batterie comprenant :
un empilement de cellules de batterie (100) dans lequel une pluralité de cellules de batterie (200) sont empilées ; et
un boîtier (300) stockant l'empilement de cellules de batterie (100) à l'intérieur de celuici,
le module de batterie étant capable de décharger une flamme ou un gaz généré par n'importe quelle cellule de batterie dans une direction prédéterminée pour empêcher sa propagation vers des cellules de batterie voisines,
chaque cellule de batterie (200) de l'empilement de cellules de batterie (100) comprenant une partie de guidage de gaz de flamme (400) configurée pour guider la flamme ou le gaz généré par la cellule de batterie (200) dans une direction,
ladite cellule de batterie (200) étant une cellule de batterie de type poche (200),
**caractérisé en ce que** ladite cellule de batterie de type poche (200) comprend :
une poche interne (210) stockant une plaque d'électrode positive (211), un séparateur (212), une plaque d'électrode négative (213) et un électrolyte (214) à l'intérieur de celle-ci et présentant une pluralité de bords formés sur celle-ci ;
une languette d'électrode positive (220) connectée à la plaque d'électrode positive (211) ;
une languette d'électrode négative (230) connectée à la plaque d'électrode négative (213) ;
un élément ignifuge (240) entourant seulement une partie de la poche interne (210) ; et
une poche externe (250) entourant la poche interne (210) et l'élément ignifuge (240), et
la partie de guidage de gaz de flamme (400) étant formée dans une partie de la poche interne (210) qui n'est pas entourée par l'élément ignifuge (240).

2. Module de batterie selon la revendication 1,
dans lequel la languette d'électrode positive (220) fait saillie de l'intérieur de la poche interne (210) vers l'extérieur à travers l'un de la pluralité de bords de la poche interne (210), et
dans lequel la languette d'électrode négative (230) fait saillie de l'intérieur de la poche interne (210) vers l'extérieur à travers le même bord que le bord où la languette d'électrode positive (220) est située, parmi la pluralité de bords de la poche interne (210).

3. Module de batterie selon la revendication 2,
dans lequel l'élément ignifuge (240) entoure les bords restants de la pluralité de bords de la poche interne (210), à l'exclusion du bord où la languette d'électrode positive (220) et la languette d'électrode négative (230) sont situées.

4. Module de batterie selon la revendication 3,
dans lequel la poche interne (210) est formée selon une forme carrée,
dans lequel la languette d'électrode positive (220) et la languette d'électrode négative (230) font saillie de l'intérieur de la poche interne (210) vers l'extérieur à travers un premier bord (215) de quatre bords de la poche interne (210), et
dans lequel la partie de guidage de gaz de flamme (400) est formée sur le premier bord (215).

5. Module de batterie selon la revendication 4,
dans lequel la poche interne (210) est formée en un rectangle comprenant un bord latéral long et un bord latéral court, et
dans lequel le premier bord (215) est le bord latéral long.

6. Module de batterie selon la revendication 1,
dans lequel l'élément ignifuge (240) est fait de mica ou de fibre de verre.

7. Module de batterie selon la revendication 1,
dans lequel une sortie (311) est formée dans une partie du boîtier (300) où la partie de guidage de gaz de flamme (400) est située de sorte que la flamme ou le gaz guidé à travers la partie de guidage de gaz de flamme (400) est déchargé vers l'extérieur du boîtier (300).

8. Module de batterie selon la revendication 7,
dans lequel le boîtier (300) comprend une partie supérieure du boîtier (310), une partie inférieure du boîtier (320), et une partie latérale du boîtier (330), et
dans lequel la sortie (311) est formée sur au moins l'un du boîtier supérieur (310) et du boîtier latéral (330).

9. Bloc-batterie comprenant le module de batterie (10) selon l'une quelconque des revendications 1 à 8.

10. Véhicule comprenant le module de batterie (10) selon l'une quelconque des revendications 1 à 8.
